# EUROPEAN PATENT APPLICATION

(11) **EP 4 732 655 A1**
(43) Date of publication of application: **29.04.2026**
(21) Application number: 25204846.7
(22) Date of filing: 26.09.2025
(51) Int. Cl.: A01C 15/04

(54) **FERTILIZER DISPENSER**

(30) Priority: 25.10.2024 IT 202400023832
(71) Applicant: Rinieri S.r.l., 47121 Forli', Frazione Collina (IT); SHELANTI AGRI CONSULTATION (PTY) LTD, 6835 Ceres Western Cape (ZA)
(72) Inventor: RINIERI, Nicola, 47121 FORLI' FC (IT); VISSER, Willem, 6835 CERES (ZA)
(74) Representative: Modiano, Micaela Nadia

(57) **Abstract**

A fertilizer dispenser (1) associable with a tractor, comprising a frame (2) for coupling to the tractor, at least one magazine (5) for storing fertilizer provided with at least one opening (6) leading to a distribution apparatus (7) provided with at least one air flow generator (8) connected to at least one duct (9) having at least one terminal dispensing outlet (10) which is open toward the outside and at least one mechanical conveyor (11), the top of which faces at least one opening (6) of the at least one storage magazine (5) for transferring predefined amounts of fertilizer originating from the at least one opening (6) of the at least one storage magazine (5) within a region of the at least one duct (9) which is comprised between its portion connected to the at least one air flow generator (8) and the at least one dispensing outlet (10).

## Description

The present invention relates to a fertilizer dispenser, in particular of the type known as a fertilizer spreader.

The term fertilizer spreader is understood to refer to a type of machine towed by a tractor (usually an agricultural tractor), used for transporting and distributing fertilizers (usually in the form of granules, powders, discrete solid elements of various shapes and sizes, and the like) in the field.

Generally, this type of machine comprises a storage magazine (which may be of the hopper type, although other embodiments are also known), equipped with means for conveying a predefined amount of said material (possibly affected by shredders or grinders to reduce the size of the individual solid elements present in the material) toward a spreading element. The spreading element, generally (but not exclusively) by using centrifugal force or compressed air, then distributes the fertilizer evenly over an area of soil in front of the manure spreader.

Depending on the energy with which the spreading element dispenses the material, the distribution area may be more or less extensive, generally contained within a surface having a predefined contour starting from the spreading element.

Although such surface potentially can be shaped with lobed contours in some specific constructive solutions, it is struck by a uniform distribution of manure or fertilizer in granules (or powder or other form). This is particularly useful and appreciated in the spreading of fertilizer in granules (or powder or other form) on open fields (generally before sowing, to enrich the soil).

On the other hand, dispensers of fertilizer in granules (or powder or other form) of the known type are not very suitable for use on crops organized in rows (such as vines, fruit trees, olive trees, and the like), although modifications are known that allow the flow of dispensed fertilizer to be concentrated more towards a predefined target.

These modifications to limit the area affected by the spreading of this fertilizing material make it possible (at least partially) to limit the competition that is triggered between weeds (for example, grass) and cultivated plants (vines or fruit trees), by attempting to confine fertilization exclusively to the cultivated plants.

However, when using this type of fertilizer spreader, a considerable amount of fertilizer in granules (or powder or other form) is also dispensed in the passageway between two adjacent rows. This has two negative consequences: firstly, areas that will subsequently have to be weeded and mowed (since the passageways must be clear and must not comprise plants that could take nutrients away from the vines, fruit trees or olive trees, etc.) will still be fertilized; secondly, fertilizer in granules (or powder or other form) is wasted, since only a certain proportion of what is dispensed (theoretically most of it, but this is not always the case) is deposited proximately to the plants of the rows (which are the only target of the fertilizing operation).

Dosage of the dispensed fertilizer is also particularly complex, since it is generally entrusted to the detection of the weight of the fertilizer being dispensed by means of load cells (or by measuring the reduction in weight of the entire hopper detected progressively, or by means of a weighing stage arranged upstream of the dispensing means).

However, this technical solution is strongly influenced by any inclination of the ground, due to the fact that the load cells are not in the correct operating conditions (and therefore perform incorrect or in any case not entirely reliable measurements).

A fertilizer and/or soil conditioner dispenser particularly suitable for use in forests (or in areas that are difficult to access) is known from US 8,925,839.

The dispenser according to the teachings of US 8,925,839 provides for the presence of end tubes through which the operators can manually direct the dispensing of the transported substances towards a specific target.

The dispenser according to the teachings of US 8,925,839 is not easily adjustable and therefore the dosing of fertilizers or soil conditioners is complex and entrusted solely to the skill of the operator holding the end tube of the dispenser.

Therefore, in the event of use with direct dispensing while the dispenser is in motion (i.e., without the flexible tube being in the hands of an operator, but in the condition in which the dispenser dispenses the provided substances directly from respective fixed outlets thereon), adjustment difficulties are observed which can lead to over- or under-dosing problems.

Moreover, the dispenser according to the teachings of US 8,925,839 provides that the duct that conveys an air flow, before being affected by the opening for the fall of the substances to be dispensed, has a portion for accelerating the air flow (the portion has a converging-diverging shape, according to the shape of a so-called Venturi tube): this acceleration causes the onset of conveyed air flow lines that are not coaxial with the duct; these "diverted" flow lines interfere with the free fall of the substances from the respective opening, further compromising the quality and accuracy of the respective dosage.

The aim of the present invention is to solve the above problems by proposing a fertilizer dispenser that is particularly suitable for localized fertilizer dispensing.

Within this aim, an object of the invention is to propose a fertilizer dispenser suitable for row crops.

Another object of the invention is to propose a fertilizer dispenser that minimizes the waste of raw materials.

Another object of the invention is to propose a fertilizer dispenser that allows easy adjustment and modulation of the flow of dispensed fertilizer.

Another object of the invention is to propose a fertilizer dispenser having minimal dimensions and space occupation, which in any case do not exceed those of the tractor to which it will be coupled.

Another object of the invention is to propose a fertilizer dispenser that allows precise dosing regardless of the slope of the ground and other external factors.

A further object of the present invention is to provide a fertilizer dispenser that is low-cost, relatively simple to provide in practice, and of assured application.

This aim and these and other objects that will become better apparent hereinafter are achieved by a fertilizer dispenser of the type configured to be transported by a tractor comprising a frame for coupling, even indirectly, to said tractor, at least one magazine for storing fertilizer provided with at least one opening leading to a distribution apparatus provided with at least one air flow generator connected to at least one duct having at least one terminal dispensing outlet which is open toward the outside and at least one mechanical conveyor, the top of which faces said at least one opening of said at least one storage magazine, configured for transferring predefined amounts of fertilizer originating from the at least one opening of said at least one storage magazine within a region of said at least one duct which is comprised between its portion connected to said at least one air flow generator and said at least one dispensing outlet, characterized in that
- said mechanical conveyor comprises a hollow casing containing a screw feeder driven by a respective controlled motor associated with respective sensors of a type selected from position sensors, speed sensors, acceleration sensors and the like, and configured for the transfer of fertilizer, originating from said opening that surmounts said hollow casing and faces it, to an output passage of said casing which merges within said region of said at least one duct that is comprised between the portion thereof connected to said at least one air flow generator and said at least one dispensing outlet;
- said output passage is a channel having a tubular shape, which is aligned with the output front of the respective screw feeder and comprises a flow control wall configured to close the lower part of said channel, leaving a free passage for the outflow of said fertilizer only at an upper portion of said channel;
- it comprises a control and management unit which controls at least one component selected from said motor and said sensors of each mechanical conveyor, said at least one air flow generator and at least one apparatus configured for instantaneous sensing of the speed of said dispenser, said unit being configured to adjust said mechanical conveyors and at least said air flow generator according to the speed of said dispenser for the correct instantaneous dosage of dispensed fertilizer.

Further characteristics and advantages of the invention will become more apparent from the description of a preferred but not exclusive embodiment of the fertilizer dispenser, illustrated by way of non-limiting example in the accompanying drawings, wherein:

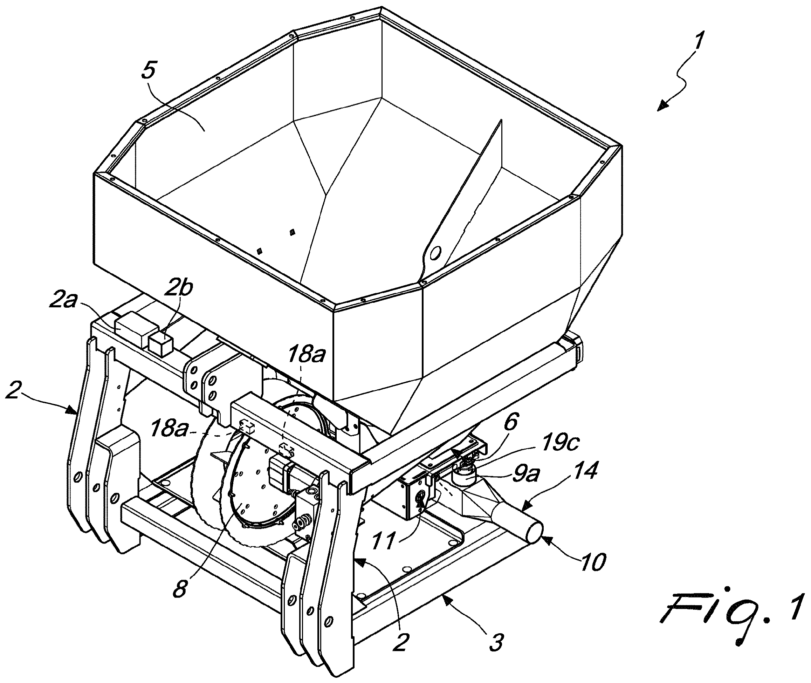

Figure 1 is a schematic perspective view of a possible embodiment of a fertilizer dispenser according to the invention;

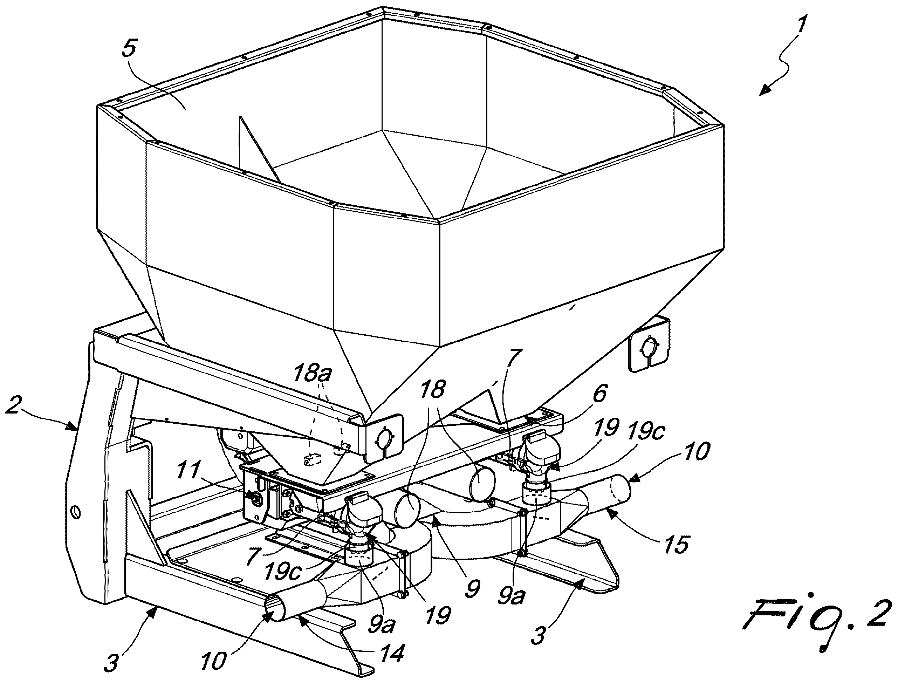

Figure 2 is a schematic perspective view, from a different viewing point, of the dispenser of Figure 1;

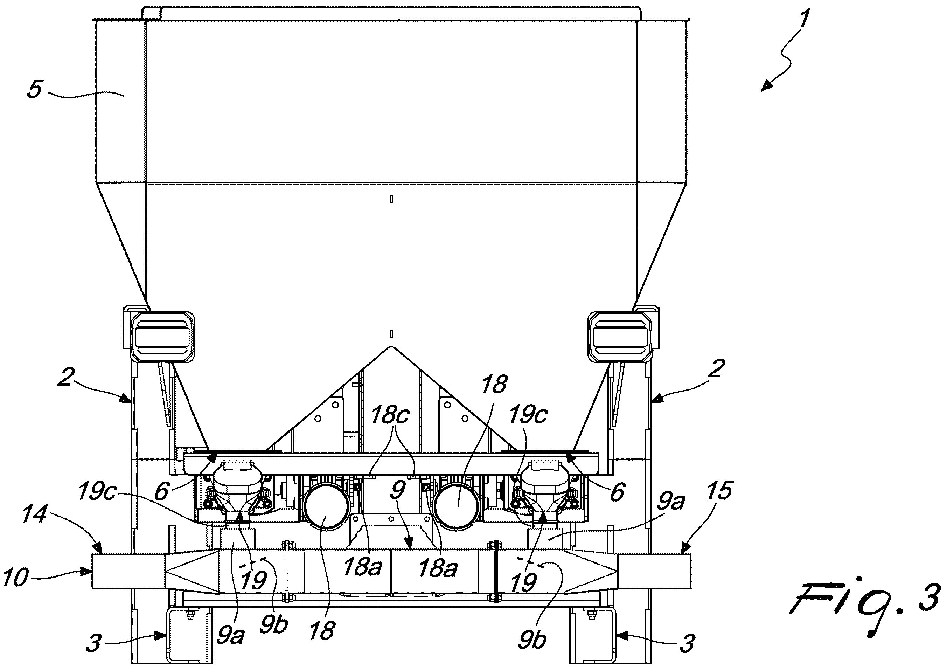

Figure 3 is a schematic front view of the dispenser of Figure 1;

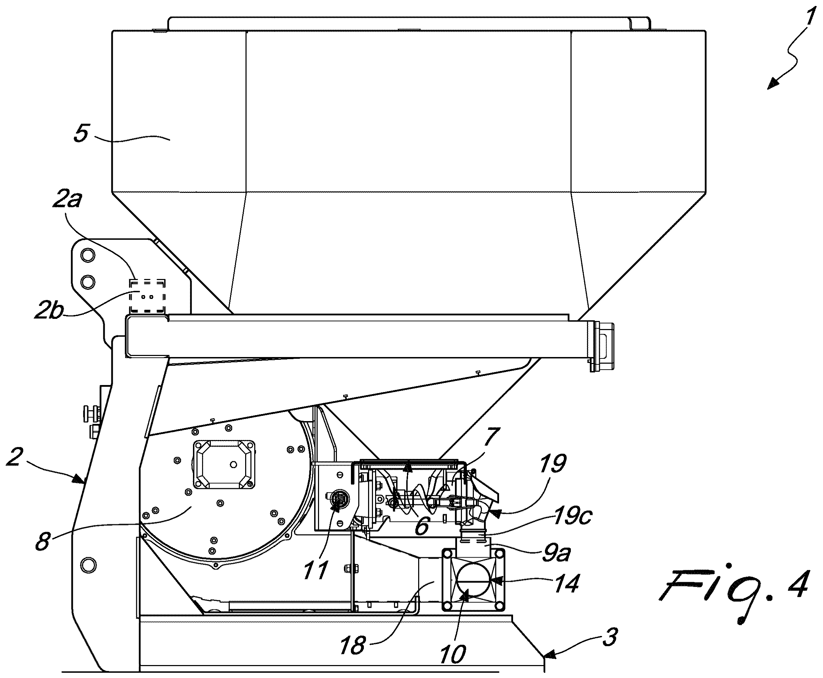

Figure 4 is a schematic side view of the dispenser of Figure 1;

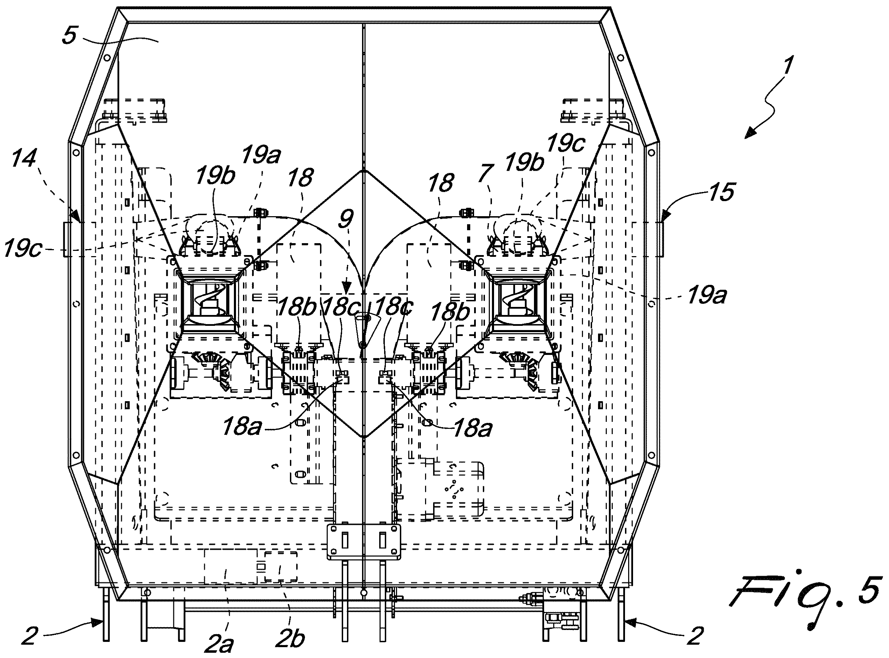

Figure 5 is a schematic top view of the dispenser of Figure 1;

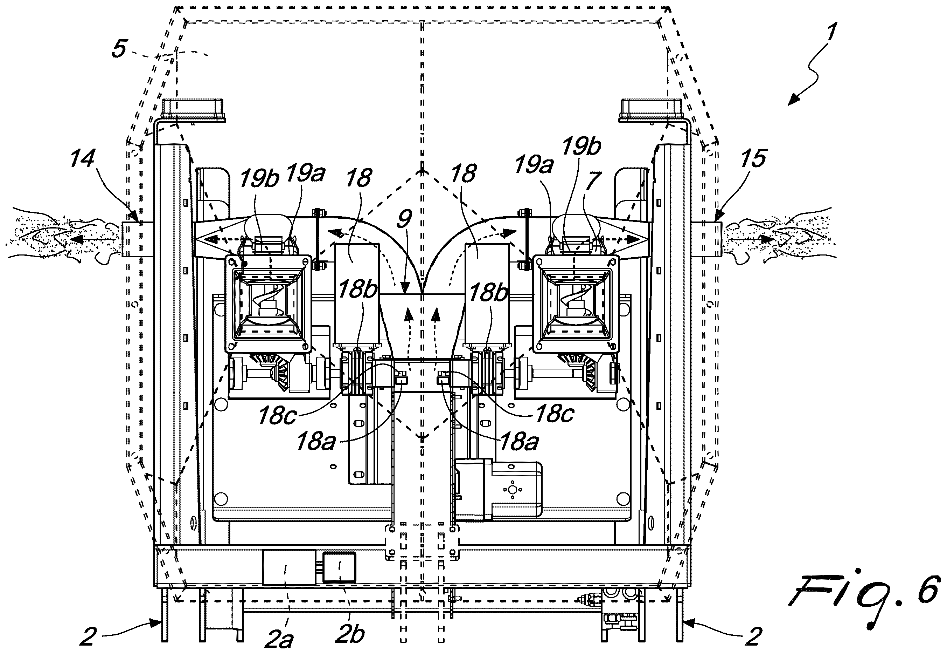

Figure 6 is a partially sectional schematic top view of the dispenser of Figure 1;

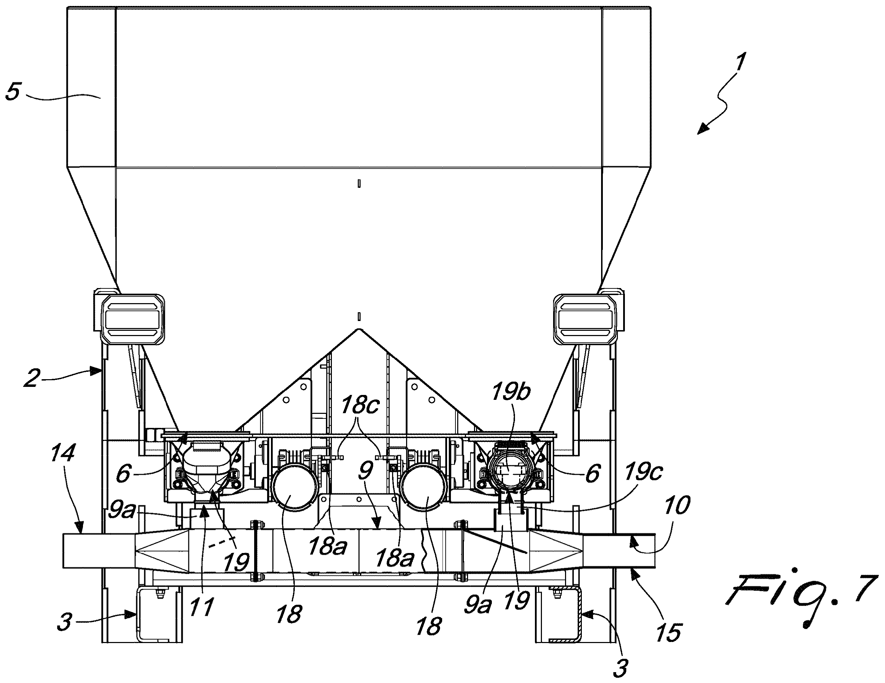

Figure 7 is a partially sectional schematic front view of the dispenser of Figure 1;

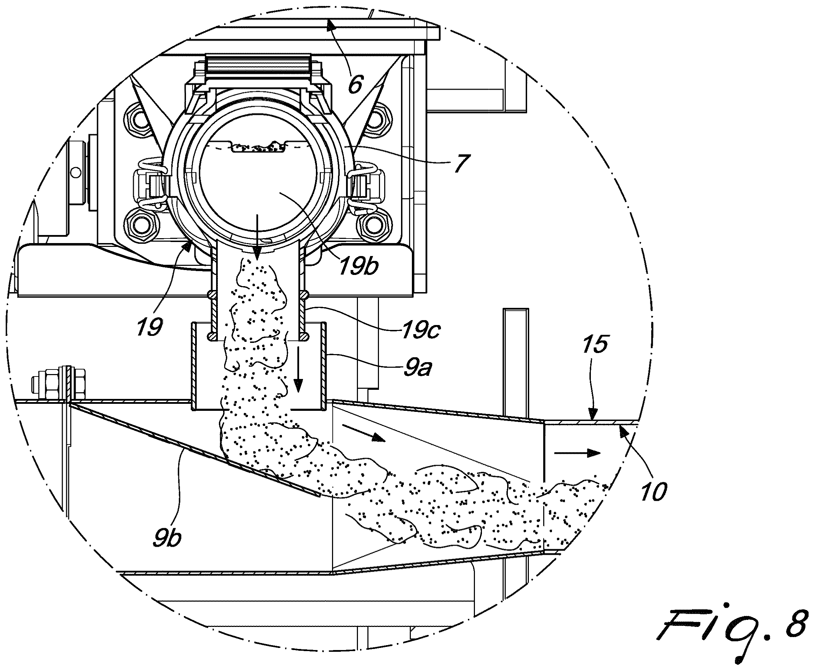

Figure 8 is an enlarged-scale view of Figure 7 in which the flow of fertilizer is shown schematically.

With reference to the figures, a fertilizer dispenser is generally designated by the reference numeral 1.

The fertilizer dispenser 1 is configured to be transported by a tractor.

The dispenser 1 comprises a frame 2 for coupling, even indirectly, to the tractor, at least one fertilizer storage magazine 5 provided with at least one opening 6 leading to a distribution apparatus 7 provided with at least one air flow generator 8 connected to at least one duct 9 having at least one terminal dispensing outlet 10 which is open onto the outside.

The dispenser 1 further comprises at least one mechanical conveyor 11, the top of which faces the at least one opening 6 of the at least one storage magazine 5, which is configured to transfer predefined amounts of fertilizer arriving from the at least one opening 6 of the at least one storage magazine 5 into a region of the at least one duct 9 that is comprised between the portion thereof connected to the at least one air flow generator 8 and the at least one dispensing outlet 10.

According to the invention, the mechanical conveyor 11 comprises a hollow casing 16 containing a screw feeder 17, driven by a respective controlled motor 18.

The term "controlled motor" (designated by the reference numeral 18 in the accompanying figures) is understood to reference any motor for which effective and precise control of the position and speed of its rotor is possible, so as to allow valid adjustments of the operating parameters of all components driven by means of said motor 18. The controlled motors 18 can also be identified by the term "servomotors", which can be mechanical, electric, pneumatic, or hydraulic.

In particular, the controlled motor 18 (or servomotor 18) may be an electric motor chosen from brushless motors, stepper motors, DC motors, synchronous motors, and asynchronous motors.

The controlled motor 18 (servomotor 18) may advantageously be associated with respective sensors 18a of a type chosen from position sensors, speed sensors, acceleration sensors, and the like.

The screw feeder 17, driven by means of the controlled motor 18 and therefore suitable for moving with an adjustable speed and for stopping at specific angular positions, is configured to transfer fertilizer, originating from the opening 6 that lies above the hollow casing 16 and faces it, to an output passage 19 of the casing 16 which merges within the region of the at least one duct 9 that is comprised between the portion thereof connected to the at least one air flow generator 8 and the at least one dispensing outlet 10.

Advantageously, the output passage 19 may be constituted by a tubular channel 19a which is aligned with the output front of the respective screw feeder 17 and comprises a flow control wall 19b configured to close the lower part of the channel 19a.

The particular shape of the flow control wall 19b advantageously allows the free outflow of the fertilizer only at an upper portion of the channel 19a.

By virtue of this particular shape of the flow control wall 19b, said wall behaves like a dam that prevents the accidental escape of the fertilizer from the channel 19a by gravity.

In fact, without the wall 19b the channel 19a would be open and would allow the fertilizer that has arrived downstream of the screw feeder 17 to fall freely into the duct 9. Even upon a stoppage of the operation of the respective screw feeder 17 (which is imposed in order to interrupt the dispensing of fertilizer), the fertilizer would continue to fall until the part of channel 19a located downstream of the outlet of the screw feeder 17 is completely emptied. This therefore entails a waste of fertilizer and its dispensing at regions of the field that would not need said fertilizer.

By virtue of the wall 19b, the fertilizer that passes the wall 19b is only the one that is pushed by the screw feeder 17 until it exceeds the level that corresponds to the upper edge of the wall 19b. Upon a stoppage in the operation of the screw feeder 17, the fertilizer that is present in the channel 19a upstream of the wall 19b would remain confined in that position because the wall 19b behaves indeed as a dam (allowing only the fertilizer that overflows above its upper edge to flow out). This means that, by virtue of this constructive design, the dispensing of fertilizer is assuredly interrupted when the screw feeders 17 stop, thus avoiding waste of fertilizer and its distribution in regions where fertilization is not provided.

According to the invention, the dispenser 1 further advantageously comprises a control and management unit 2a, which is controlled by at least one component chosen from the motor 18, the sensors 18a of each mechanical conveyor 11, which are responsible for detecting the speed and angular position of the shaft 18b of the motor 18, even indirectly, the at least one air flow generator 8, and at least one apparatus 2b configured for instantaneous sensing of the speed of the dispenser 1.

It should be noted that in a particularly simple and efficient constructive solution, the adjustment of the flow rate and speed of the air flow might also be performed by means of a manually operated valve (so that the nominal air flow rate is defined solely by the mechanical energy supplied by the tractor and, with respect to it, adjustment/throttling is possible), although the use of an electric valve controlled by the unit 2a is not excluded.

The term "control and management unit" 2a is understood to reference any processing device of the type of a programmable logic controller, an electronic control unit, an actual computer (handheld or of another type) and/or other equivalent devices. The term "apparatus 2b configured for instantaneous sensing of the speed of the dispenser 1" is understood to reference any device that allows the sensing of the speed at which the dispenser 1 advances in the fields (or between rows of vines and/or orchards and/or olive groves and the like): the device may be controlled by the motor to which the dispenser 1 is connected (obtaining from it all the parameters relating to the instantaneous speed through the respective speedometer or other component suitable for this purpose) or it may be independent of said tractor.

The unit 2a is therefore conveniently configured to adjust the mechanical conveyors 11 and the at least one air flow generator 8 according to the speed (of advancement) of the dispenser 1, for the correct instantaneous dosage of dispensed fertilizer.

In fact, if the dispenser 1 advances at high speed, it will be necessary to provide a high flow rate of dispensed fertilizer in order to ensure that each specific region of the soil receives the right amount thereof (according to the dosages provided per square meter of soil); if the dispenser 1 advances slowly, on the other hand, the flow rate of the dispensed fertilizer also must be low to ensure the same dosage of fertilizer per square meter of soil.

With particular reference to a constructive solution of undoubted practical and applicative interest, the apparatus 2b for instantaneous speed control is a GPS module functionally associated with the control and management unit.

The use of a GPS module is particularly advantageous because, in addition to constantly estimating the advancement speed of the dispenser 1 and the direction along which such advancement occurs, it also allows precise geolocation of the dispenser 1 itself.

By virtue of the geolocation of the dispenser, it is also possible to provide that the fertilizer is dispensed according to predefined patterns obtained following a preliminary mapping of the area to be fertilized.

In fact, the mapping might identify areas that require a greater amount of fertilizer and others that do not need to be fertilized at all (comprising all possible intermediate nuances). By virtue of the presence of the GPS module, in other words, it becomes possible to perform targeted fertilization (according to precision farming criteria), carrying it out completely automatically.

It should be noted, moreover, that the sensors 18a of the respective controlled motor 18 can efficiently comprise an encoder, which faces and is proximate to a shaft 18c connected, optionally with the interposition of other components, to the shaft 18b of the motor 18.

The at least one duct 9 may usefully comprise at least one first tubular body 13 connected to at least one sleeve 14, 15 provided with a dispensing outlet 10 oriented towards the specific and delimited area to be fertilized. Generally, the dispensing outlet will be arranged along one side of the dispenser 1 and will be designed to dispense the fertilizer in a direction that will have at least one component perpendicular to said side of the dispenser 1.

The output passage 19 comprises, downstream of the flow control wall 19b, a substantially vertical channel 19c which is inserted inside a corresponding through hollow bushing 9a of the region of the at least one duct 9 comprised between the portion thereof connected to the at least one air flow generator 8 and the at least one dispensing outlet 10.

There is a predefined mechanical clearance between the vertical channel 19c and the through hollow bushing 9a: in other words, the through hole of the bushing 9a that accommodates the end portion of the channel 19c has a larger diameter than the channel 19c. This constructive particularity ensures that even when the dispenser 1 is moving forward on the ground (which, being agricultural ground, will be uneven), the oscillations that occur cannot damage the channel 19c and the bushing 9a, because they are free to move relative to each other within the range allowed by the mechanical clearance.

It should be noted, moreover, that at least one duct 9, at the region comprised between the portion thereof connected to at least one air flow generator 8 and the at least one dispensing outlet 10, substantially below the through hollow bushing 9a, comprises an inclined laminar plate 9b which forms a conveyance chute for the fertilizer that arrives by gravity from the channel 19c inserted within the hollow bushing 9a.

The inclined laminar plate 9b ensures that the fertilizer that arrives from the channel 19c is not directly affected by the air flow present in the duct 9, thus allowing the fertilizer granules or grains or powders or elements to enter the duct 9, falling by gravity, without their motion being disturbed by the air flow itself. Once the fertilizer strikes the inclined laminar plate 9b, it slides along it until it falls into the air flow in a position ahead (with respect to the direction of the air flow in the duct 9) of the opening of the bushing 9a. Therefore, the motion of the fertilizer falling from channel 19c is disturbed by the air flow only when it has already been moved forward by the plate 9c, which behaves like a chute. The air flow therefore cannot cause any slowing down and/or partial blocking of the falling of the fertilizer, as occurs instead in the dispenser according to the teachings of prior patent US 8,925,839, in which the converging-diverging duct (shaped like a Venturi tube) determines air flow lines that also have a vertical component opposite to the falling direction of the fertilizer (which cause a slowing and/or halting of part of the fertilizer, seriously compromising the accuracy of its dosage). The dispenser 1 according to the invention is therefore much more accurate (in terms of fertilizer dosage) than any dispenser of the known type.

A highly efficient embodiment provides for two sleeves 14, 15, arranged in a symmetrical configuration with respect to the vertical longitudinal centerline of the dispenser 1. In this case, each sleeve 14, 15 is provided with a respective dispensing outlet 10 oriented towards a respective circumscribed area to be fertilized. The two dispensing nozzles 10 will generally be mutually opposite and arranged at opposite lateral sides of the dispenser 1.

The dispenser 1 according to the invention may further favorably comprise at least one magazine 5 for storing the fertilizer which is provided with at least two openings 6.

Each opening 6 faces a respective mechanical conveyor 11 configured to transfer predefined amounts of fertilizer arriving from the respective opening 6 into a respective region of the at least one duct 9 comprised between the portion thereof connected to the at least one air flow generator 8 and the at least one dispensing outlet 10.

In particular, a first mechanical conveyor 11, which faces a first opening 6, is configured to transfer predefined quantities of fertilizer arriving from the respective first opening 6 into a respective region of a first sleeve 14, and a second mechanical conveyor 11, which faces a second opening 6, is configured to transfer predefined quantities of fertilizer arriving from the respective second opening 6 into a respective region of a second sleeve 15.

Moreover, it is specified that in embodiments dedicated to specific applications the at least one duct 9 may be provided with terminals of a type chosen from orientable terminals, for aligning the dispensing outlet 10 with the specific and delimited area to be fertilized, and plug-in terminals, constituting an extension for moving the dispensing outlet 10 away from the lateral side of the dispenser 1, with consequent dispensing at a greater distance from it. It is not excluded that such terminals may comprise a dispensing outlet 10 conveniently contoured to determine a specific shape of the flow (of air and fertilizer) in output from it, in order to better adapt to specific applications.

The dispenser 1 shown in the accompanying figures by way of non-limiting example is symmetrical and therefore makes it possible to dispense fertilizer externally with respect to the two lateral sides. However, depending on the specific conditions in which the dispenser 1 operates, it is not excluded that dispensing from one of the two outlets 10 may be interrupted and/or a different fertilizer flow rate may be provided from each outlet 10, in order to ensure that different regions of the field (or row or orchard or the like) to be fertilized are subject to a different dosage.

In this way, by virtue of a prior mapping of the area to be fertilized, it will be possible to dose in a fully automatic manner, thanks to the presence of the control and management unit 2a, the amount of fertilizer dispensed, exploiting the independence of the two conveyors 11 and the geolocation obtained via the GPS module.

Clearly, the output passage 19 of the casing 16 of each mechanical conveyor 11 is connected to a respective region of a respective sleeve 14, 15 (in which the respective bushing 9a is installed).

The at least one storage magazine 5 is arranged on the frame 2 in a position above the at least one distribution apparatus 7: the fertilizer accommodated within the at least one storage magazine 5 reaches the at least one distribution apparatus 7 through the at least one opening 6 by gravity. For this reason, the storage magazine can be validly shaped like a hopper, so as to convey the fertilizer towards the opening 6.

The at least one air flow generator 8 is of a type chosen from a pneumatic fan, a ventilation turbine, a compressor, and the like. The at least one generator 8 is powered by a component chosen from an electric battery storage unit, an electric generator, the power take-off of the tractor with which the dispenser 1 is associated, a hydraulic circuit, and the like.

Advantageously, the present invention solves the problems described above by proposing a fertilizer dispenser 1 that is particularly suitable for localized fertilizer dispensing, meeting the typical needs of crops cultivated in rows, used for vines, fruit trees, olive trees, and numerous other cases.

Conveniently, the dispenser 1 according to the invention is particularly suitable for row crops since it has functional characteristics and dimensions that make it perfectly compatible with treatments carried out in the passageways between adjacent rows of a crop.

The dispenser 1 according to the invention advantageously minimizes the waste of raw material, since the fertilizer (for example, granular fertilizer) is distributed only proximately to the stem or trunk of the plants of interest, avoiding the dispersion of fertilizer in other regions of the soil.

The dispenser 1 according to the invention favorably allows easy adjustment and modulation of the flow of dispensed fertilizer.

Positively, the dispenser 1 according to the invention has minimal dimensions and space occupation, in any case not exceeding those of the tractor to which it will be coupled: this will allow the dispenser to be used even in very narrow corridors between adjacent rows and will also allow installation on small tractors.

Efficiently, the dispenser 1 according to the invention allows precise dosing of the dispensed fertilizer regardless of the slope of the ground and other external factors, since this dosing is determined solely by the operation of the distribution apparatus 7 (without providing for load cells, as instead provided for in the background art in this field).

Validly, the dispenser 1 according to the invention is relatively simple to provide in practice and low-cost: these characteristics make the dispenser 1 according to the invention an innovation of assured application.

The invention thus conceived is susceptible of numerous modifications and variations, all of which are within the scope of the appended claims; all the details may furthermore be replaced with other technically equivalent elements.

In the exemplary embodiments shown, individual characteristics, given in relation to specific examples, may actually be interchanged with other characteristics that exist in other exemplary embodiments.

In practice, the materials used, as well as the dimensions, may be any according to the requirements and the state of the art.

The disclosures in Italian Patent Application No. 102024000023832 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A fertilizer dispenser of the type configured to be transported by a tractor comprising a frame (2) for coupling, even indirectly, to said tractor, at least one magazine (5) for storing fertilizer provided with at least one opening (6) leading to a distribution apparatus (7) provided with at least one air flow generator (8) connected to at least one duct (9) having at least one terminal dispensing outlet (10) which is open toward the outside and at least one mechanical conveyor (11), the top of which faces said at least one opening (6) of said at least one storage magazine (5), configured for transferring predefined amounts of fertilizer originating from the at least one opening (6) of said at least one storage magazine (5) within a region of said at least one duct (9) which is comprised between its portion connected to said at least one air flow generator (8) and said at least one dispensing outlet (10), **characterized in that**
- said mechanical conveyor (11) comprises a hollow casing (16) containing a screw feeder (17) driven by a respective controlled motor (18) associated with respective sensors (18a) of a type selected from position sensors, speed sensors, acceleration sensors and the like, and configured for the transfer of fertilizer, originating from said opening (6) that surmounts said hollow casing (16) and faces it, to an output passage (19) of said casing (16) which merges within said region of said at least one duct (9) that is comprised between the portion thereof connected to said at least one air flow generator (8) and said at least one dispensing outlet (10);
- said output passage (19) is a channel (19a) having a tubular shape, which is aligned with the output front of the respective screw feeder (17) and comprises a flow control wall (19b) configured to close the lower part of said channel (19a), leaving a free passage for the outflow of said fertilizer only at an upper portion of said channel (19a);
- and it comprises a control and management unit (2a) which controls at least one component selected from said motor (18) and said sensors (18a) of each mechanical conveyor (11), said at least one air flow generator (8) and at least one apparatus (2b) configured for instantaneous sensing of the speed of said dispenser (1), said unit (2a) being configured to adjust said mechanical conveyors (11) and at least said air flow generator (8) according to the speed of said dispenser (1) for the correct instantaneous dosage of dispensed fertilizer.

2. The fertilizer dispenser according to claim 1, **characterized in that** said apparatus (2b) for instantaneous speed control is a GPS module functionally associated with said control and management unit (2a).

3. The fertilizer dispenser according to claim 1, **characterized in that** said sensors (18a) of said respective controlled motor (18) comprise an encoder which faces and is proximate to a shaft (18c) which is connected, even with the interposition of other components, to the shaft (18b) of said motor (18).

4. The fertilizer dispenser according to claim 1, **characterized in that** said at least one duct (9) comprises at least one first tubular body (13) connected to at least one sleeve (14, 15) provided with a dispensing outlet (10) oriented towards the specific and delimited area to be fertilized.

5. The fertilizer dispenser according to the preceding claim, **characterized in that** said output passage (19) comprises, downstream of said flow control wall (19b), a substantially vertical channel (19c) inserted in a corresponding through hollow bushing (9a) of said region of said at least one duct (9) comprised between the portion thereof connected to said at least one air flow generator (8) and said at least one dispensing outlet (10).

6. The fertilizer dispenser according to the preceding claim, **characterized in that** said at least one duct (9), at said region comprised between the portion thereof connected to said at least one air flow generator (8) and said at least one dispensing outlet (10), substantially below said through hollow bushing (9a), comprises an inclined laminar plate (9b) which forms a conveyance chute for said fertilizer that arrives by gravity from said channel (19c) inserted within said hollow bushing (9a).

7. The fertilizer dispenser according to claim 5, **characterized in that** said sleeves (14, 15) are two, arranged in a symmetrical configuration with respect to the vertical longitudinal centerline plane of said dispenser (1), each sleeve (14, 15) being provided with a respective dispensing outlet (10) oriented toward a respective delimited area to be fertilized.

8. The fertilizer dispenser according to the preceding claim, **characterized in that** at least one fertilizer storage magazine (5) comprises at least two openings (6), each opening (6) facing a respective mechanical conveyor (11) configured for transferring predefined amounts of fertilizer arriving from the respective opening (6) into a respective region of said at least one duct (9) comprised between the portion thereof connected to said at least one air flow generator (8) and said at least one dispensing outlet (10).

9. The fertilizer dispenser according to one or more of the preceding claims, **characterized in that** a first mechanical conveyor (11), which faces a first opening (6), is configured for transferring predefined amounts of fertilizer arriving from the respective first opening (6) into a respective region of a first sleeve (14) and a second mechanical conveyor (11), which faces a second opening (6), is configured for transferring predefined amounts of fertilizer arriving from the respective second opening (6) into a respective region of a second sleeve (15).

10. The fertilizer dispenser according to one or more of the preceding claims, **characterized in that** said at least one duct (9) is provided with terminals of a type chosen from orientable terminals, for the alignment of said dispensing outlet (10) with the specific and circumscribed area to be fertilized, and insertion coupling terminals, which constitute an extension for moving the dispensing outlet (10) away from the lateral wall of said dispenser (1), with consequent dispensing at a greater distance therefrom.
